# FASCICULE DE BREVET EUROPEEN

(11) **EP 2 936 281 B1**
(45) Date de publication et mention de la délivrance du brevet: **29.08.2018**
(21) Numéro de dépôt: 13821850.8
(22) Date de dépôt: 18.12.2013
(51) Int. Cl.: G06F 3/01, G06F 3/03, G06F 3/042

(54) **MODULE D'INTERFACE**
SCHNITTSTELLENMODUL
INTERFACE MODULE

(30) Priorité: 21.12.2012 FR 1203575
(43) Date de publication de la demande: 28.10.2015
(73) Titulaire: DAV, 94046 Créteil Cedex (FR)
(72) Inventeur: AUBRY, Anthony, F-94046 Créteil Cedex (FR); TISSOT, Jean-Marc, F-94046 Créteil Cedex (FR)
(74) Mandataire: Pothmann, Karsten
(86) Numéro de dépôt international: PCT/FR2013/000347
(87) Numéro de publication internationale: WO 2014/096568

(56) Documents cités:
- EP-A1- 2 352 078
- US-A1- 2009 189 858
- US-A1- 2012 032 923

## Description

La présente invention concerne un module d'interface, en particulier pour l'habitacle d'un véhicule automobile et le contrôle de fonctions dudit véhicule, notamment au moyen d'un détecteur d'appui tel qu'une surface tactile.

Pour contrôler des fonctions d'un véhicule telles que l'air conditionné, un autoradio ou un assistant de navigation, il est connu d'utiliser des modules d'interface à surfaces ou dalles tactiles, aptes à détecter un appui d'un utilisateur et à déclencher l'exécution d'une commande en conséquence. D1 (US 2012/032923 A1) divulgue un dispositif permettant de capter des gestes de la main grâce à des capteurs optiques. Les dalles tactiles utilisées, généralement résistives ou capacitives sont toutefois coûteuses.

En outre, la combinaison d'une telle dalle tactile avec un capteur de geste, apte à détecter un geste effectué à distance, est complexe et requiert de l'espace dans l'habitacle du véhicule pour les deux jeux de capteurs (capteur de geste et dalle tactile) distincts. La demande a pour objet un module de capteurs tel que défini dans la revendication indépendante. Afin de pallier au moins partiellement les défauts précédemment mentionné, la demande a pour objet un module de capteurs, comprenant :
- un pluralité d'émetteurs optiques, configurés pour émettre des faisceaux lumineux en direction d'un espace de détection,
- une pluralité de capteurs optiques, configurés pour capter de la lumière des faisceaux lumineux diffusée par un élément de commande utilisé par un utilisateur pour effectuer un geste destiné à déclencher l'exécution d'une commande,
- une surface de contact, transparente au moins partiellement à la lumière des faisceaux lumineux, placée en amont des capteurs optiques,
dans lequel :
- une partie des émetteurs optiques est configurée pour émettre des faisceaux lumineux courte portée, dont la lumière diffusée par l'élément de commande est captée par les capteurs optiques,
- le module de capteurs comporte une interface avec une unité de contrôle configurée pour déterminer la position de l'élément de commande pour exécuter le geste par rapport une distance prédéterminée distale par rapport à la surface de contact définissant une frontière d'appui, et pour interpréter les gestes détectés en position proximale par rapport à ladite frontière d'appui par captage de la lumière des faisceaux lumineux courte portée par les capteurs optiques comme des appuis ou appuis glissés sur la surface de contact.

Ledit module de capteurs peut présenter une ou plusieurs des caractéristiques suivantes, prises seules ou en combinaison.

Une partie des émetteurs optiques est configurée pour émettre des faisceaux lumineux longue portée dont la lumière diffusée par l'objet utilisé par l'utilisateur pour effectuer le geste est captée par les capteurs optiques au-delà de la distance prédéterminée définissant la frontière d'appui, et l'unité de contrôle est configurée pour interpréter les gestes détectés en position distale par rapport à ladite frontière d'appui par captage de la lumière des faisceaux lumineux longue portée par les capteurs optiques comme des gestes distaux. Ceci permet de combiner détecteur d'appui et de geste de manière compacte avec un seul dispositif physique, disposé derrière la surface de contact formant façade.

Les émetteurs optiques comportent des diodes électroluminescentes infra-rouge.

Il comporte un dispositif optique convertissant les faisceaux lumineux d'au moins une partie des diodes électroluminescentes infra-rouge en faisceaux lumineux respectivement longue et/ou courte portée. Ceci permet d'utiliser un seul type de diodes.

Le dispositif optique comporte des lentilles convergentes pour convertir des faisceaux lumineux d'une partie des diodes électroluminescentes infra-rouge en faisceaux lumineux longue portée. On utilise ainsi une seule plaque transparente sur laquelle les lentilles sont formées

Le dispositif optique comporte des lentilles divergentes pour convertir des faisceaux lumineux d'une partie des diodes électroluminescentes infra-rouge en faisceaux lumineux courte portée.

Les émetteurs optiques et les capteurs optiques sont disposés sur un support commun. Ceci permet d'obtenir un module compact et aisément assemblé et implémenté. La demande a aussi pour objet le module d' interface comprenant un tel module de capteur et l'unité de contrôle associée.

Le module d'interface peut comprendre une unité de contrôle configurée pour :
- acquérir des propriétés d'un geste détecté par traitement du signal des capteurs optiques,
- et pour ignorer ledit geste s'il est au moins partiellement exécuté dans la zone morte.

Ceci permet de résoudre les conflits potentiels entre la fonction capteur d'appui et la fonction capteur de geste.

Enfin la demande a aussi pour objet le module de contrôle d'éclairage intérieur de véhicule automobile associé, destiné à être implémenté dans un plafonnier dudit véhicule, caractérisé en ce qu'il comporte un module d'interface tel que précédemment décrit.

Ceci permet un contrôle sécurisé et ergonomique de l'illumination de l'habitacle

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement un module d'interface selon un aspect particulier de l'invention,
- la figure 2 montre un découpage en zones de l'espace de détection pour un module d'interface tel qu'en figure 1,
- la figure 3 montre un habitacle de véhicule dans lequel des modules selon l'invention sont intégrés,

Sur toutes les figures, les mêmes références se rapportent aux mêmes éléments.

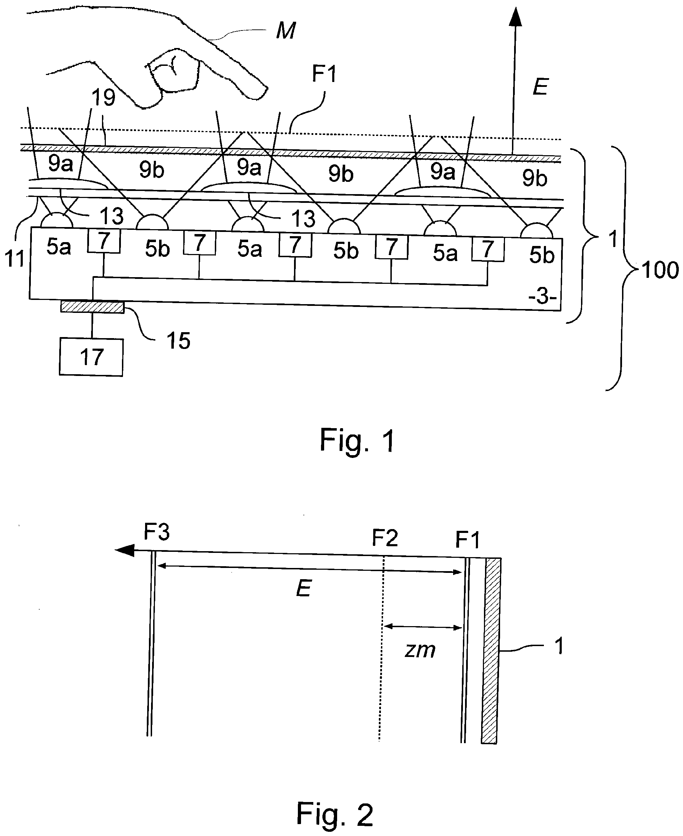

En figure 1 est montré de façon schématique un module de capteurs 1 selon un mode de réalisation particulier de l'invention.

Le module de capteurs 1 comporte ici en particulier un support 3 sur lequel sont disposés des émetteurs optiques 5a, 5b et des capteurs optiques 7.

Les émetteurs optiques 5a, 5b comportent ici en particulier des diodes électroluminescentes infra-rouge, configurées pour émettre des faisceaux lumineux, formant des cônes d'illumination respectivement 9a et 9b, en direction d'un espace de détection *E*

L'espace de détection *E* s'étend à partir du module de capteurs 3 en direction d'un utilisateur, les qualités de distal ou proximal lorsqu'utilisées ci-après sont définies le long de l'axe partant du module de capteurs 3 en direction de l'utilisateur et par rapport audit module de capteurs 3.

Les capteurs optiques 7 comportent ici par exemple des matrices de capteurs à transfert de charge (dits CCD, ≪ charge-coupled device ≫) pour l'acquisition d'images à partir de lumière venant de l'espace de détection *E*.

En particulier, les capteurs optiques 7 sont configurés pour capter la lumière des cônes d'illumination 9a, 9b des émetteurs optiques 5a, 5b, réfléchie ou diffusée par un élément de commande *M* utilisé par l'utilisateur pour effectuer un geste en vue de contrôler une fonction.

L'élément de commande *M* peut en particulier être la main ou une partie de la main de l'utilisateur (comme montré en figure 1), ou bien un élément manipulable formant repère, par exemple un stylet muni d'une surface réfléchissante.

Le support 3 des éléments précédemment mentionnés peut par exemple comporter une carte à circuit imprimé, avec un corps en résine ou matériau plastique ou composite, pouvant porter en outre au moins une partie de l'électronique de traitement d'image (processeurs, unités de mémoire, unités de comparaison d'images successives, etc.) des capteurs optiques 7, et des circuits d'alimentation des composants précités.

Une première partie des émetteurs optiques 5a est configurée pour avoir un cône d'illumination 9a relativement fermé et donc longue portée, tandis que l'autre partie des émetteurs optiques 5b est configurée pour avoir un cône d'illumination 9b relativement ouvert et donc courte portée.

La portée des émetteurs optiques 5a, 5b est définie en fonction des capteurs optiques 7 et de l'intensité des diodes utilisées comme étant la distance maximale à laquelle l'élément de commande *M* illuminé par lesdites diodes des émetteurs optiques 5a, 5b est détecté par les capteurs optiques 7, et peut notamment être définie et/ou modifiée par des seuils de détection paramétrables.

Dans le mode de réalisation représenté en figure 1, les diodes sont identiques et produisent toutes un faisceau lumineux initialement sous forme de cône d'illumination large et courte portée, d'ouverture de l'ordre de 120° , typiquement entre 90° et 150°.

De telles diodes sont courantes et de prix relativement peu élevé.

Lesdites diodes sont recouvertes par un dispositif optique 11, comportant ici essentiellement une plaque de matériau transparent à la gamme spectrale utilisée.

Ledit dispositif optique 11 présente des reliefs formant des lentilles convergentes 13 qui forment avec respectivement une des diodes les émetteurs longue portée 5a, à partir d'un faisceau initial desdites diodes. Ledit dispositif optique présente en outre des éléments optiquement neutres, par exemple une épaisseur constante ou des perçages, qui forment respectivement avec une des diodes les émetteurs 5b courte portée en conservant les propriétés de leur faisceau initial large et courte portée.

Les faisceaux longue portée sont des cônes d'illumination d'ouverture de l'ordre de 60°, typiquement entre 30° et 80°.

D'autres modes de réalisation sont possibles en partant de diodes 5a, 5b initialement à cônes étroits longue portée, sur lesquelles est placé un dispositif optique 11 comportant des lentilles divergentes, ou bien partant de diodes 5a, 5b de portée intermédiaire, avec un dispositif optique 13 comportant à la fois des lentilles divergentes et convergentes.

Dans le mode de réalisation représenté, les diodes longue portée 5a et courte portée 5b sont alternés sur une ligne. Dans le cadre d'une matrice d'émetteurs 5a, 5b, un motif en damier ou une alternance ligne par ligne peuvent être utilisé.

Les capteurs optiques 7 sont reliés à une interface 15 avec une unité de contrôle 17.

L'interface 15 peut notamment comporter une fiche de connexion avec un ensemble de contacts électriques et des moyens de maintien d'une prise reliée à l'unité de contrôle 17.

Le module de capteurs 1 comporte en outre une surface de contact 19, composée par exemple d'une plaque de matériau transparent à la gamme spectrale des émetteurs optiques 5a, 5b, et placée en position distale par rapport aux capteurs optiques 7 de sorte à les recouvrir et former ainsi une façade.

Le module de capteurs 1 et l'unité contrôle 17 font partie d'un module d'interface 100.

L'unité de contrôle 17 est configurée pour déterminer la position de l'élément de commande *M* par rapport une distance prédéterminée au-delà de la surface de contact 19 définissant une frontière d'appui F1 proche et distale par rapport à la surface de contact 19. L'unité de contrôle 17 interprète ensuite les gestes détectés en position proximale par rapport à ladite frontière d'appui F1 par captage de la lumière des cônes d'illumination courte portée 11b, au moyen des capteurs optiques 7, comme des appuis ou appuis glissés sur la surface de contact 19.

La distance séparant la frontière d'appui F1 et la surface de contact 19 est de préférence courte, de l'ordre de quelques millimètres, par exemple de un à quinze millimètres.

L'unité de contrôle 17 peut alors être configurée pour que la détection en position proximale de l'élément par rapport à ladite frontière d'appui F1 soit prise en compte comme un appui de l'utilisateur par le capteur d'appui 3. Au moyen d'un seul dispositif on réalise ainsi un module de capteurs 1 combinant un capteur de geste distants et un capteur d'appuis.

L'unité de contrôle comporte 17 notamment tout ou partie des moyens de traitement des images acquises par les capteurs optiques 7, ainsi que d'éventuels moyens de contrôle des émetteurs optiques 5a, 5b pour synchroniser leur allumage et leur extinction avec des fenêtres temporelles d'acquisition des capteurs optiques 7.

L'unité de contrôle 17 peut en particulier être configurée pour alterner des phases d'activation des émetteurs optiques respectivement longue portée 5a et courte portée 5b. La détection en position proximale par rapport à la frontière d'appui F1 d'un geste lors des phases d'activation des émetteurs courte portée 5b déclenche la prise en compte dudit geste comme un appui ou un appui glissé sur la surface de contact 19. Un geste détecté lors des phases d'activation des émetteurs longue portée 5a n'est alors pas pris en compte.

En alternative, lors de la détection en position proximale par rapport à la frontière d'appui F1 d'un geste lors des phases d'activation des émetteurs courte portée 5b, l'unité de contrôle 17 peut déclencher l'interruption des phases d'activation des émetteurs optiques longue portée 5a tant que l'élément de commande se trouve en position proximale par rapport à la frontière d'appui F1.

Les gestes détectés lors des phases d'activation des émetteurs longue portée 5a sont interprétés comme des gestes distants s'ils sont exécutés en position distale par rapport à la frontière d'appui F1, et ignorés sinon.

L'unité de contrôle 17 peut en particulier être intégrée au moins partiellement dans une électronique de bord du véhicule automobile, et/ou partagée avec d'autres modules d'interface ou fonctionnels.

L'unité de contrôle 17 est ici aussi configurée pour interpréter les gestes détectés au-delà de ladite frontière d'appui F1 par captage de la lumière des faisceaux lumineux longue portée 9a par les capteurs optiques 7 comme des gestes distaux.

Ainsi, le module de capteurs 1 permet deux niveaux de détection (geste et appui) à partir d'un seul ensemble de diodes 5a, 5b pouvant être assemblées au sein d'un unique module de capteurs 1 recouvert par la surface de contact 19 formant façade, et sans recourir aux dalles tactiles résistives ou capacitives qui sont relativement chères.

Un exemple de configuration de module de capteurs 1 avec plusieurs frontières correspondantes, respectivement distale F3, intermédiaire F2, et d'appui F1 est illustré en figure 2.

La frontière distale F3 est soit la limite de la portée des émetteurs longue portée 5a, soit fixée par des seuils de détection artificiels et délimite l'étendue distale de l'espace de détection *E*. Le module d' interface 100 implémenté dans un habitacle de voiture est avantageusement configuré pour que la distance à la frontière distale F3 soit de l'ordre de quelques dizaines de centimètres, typiquement de vingt à trente.

La frontière intermédiaire F2 est ici une frontière donnée par des conditions artificielles sur les mesures de la lumière diffusée par l'élément de commande *M* des émetteurs optiques longue portée 5a ou courte portée 5b, et donc établie par paramétrage, par exemple de seuils de détection, au niveau de l'unité de contrôle 17 pour correspondre à une distance prédéterminée du module de capteurs 1.

La frontière intermédiaire F2 est placée en position distale par rapport au module de capteurs 1, par exemple à quelques centimètres de celle-ci, typiquement de dix à cinquante millimètres, en particulier de vingt à trente millimètres. Elle se situe en particulier entre les frontières d'appui F1 et distale F3.

La zone proximale par rapport à la frontière intermédiaire F2 et distale par rapport à la frontière d'appui F1 est ici définie en tant que zone ≪ morte ≫ *zm* : les gestes effectués dans ladite zone morte sont ignorés par l'unité de contrôle 17.

En alternative, l'unité de contrôle peut être configurée pour acquérir les propriétés d'un geste détecté par traitement du signal des capteurs optiques 7 et pour ignorer ledit geste si celui-ci est au moins partiellement exécuté dans la zone morte *zm.* Ceci permet un traitement simplifié de la zone morte, potentiellement moins coûteux en ressources de calcul.

Il est en outre avantageusement possible de configurer l'unité de contrôle 17 pour introduire un temps de latence entre la détection d'un geste et l'exécution de la commande associée. Ce temps est un compromis entre haute probabilité d'ignorer un geste d'approche et perception par l'utilisateur du décalage temporel, pouvant être perçu comme gage de mauvaise qualité.

Si l'élément de commande *M* est détecté en position proximale par rapport à la frontière intermédiaire F2 ou, en alternative par rapport à la frontière d'appui F1, les commandes correspondant à des gestes détectés mais non encore pris en compte ne sont alors pas exécutées.

En particulier, les gestes suivant détectés dans la zone proximale par rapport à la frontière intermédiaire F2 sont ignorés.

Une entrée dans la zone morte *zm* peut ainsi être interprétée comme un mouvement d'approche en direction de la surface de contact 19 en vue d'y exercer un appui, et les mouvements associés ne sont alors pas interprétés comme geste correspondant à une commande.

La frontière d'appui F1 est ici la limite de détection de la lumière diffusée par l'élément venant des diodes courte portée 15b. Cette limite est soit intrinsèque, c'est-à-dire fixée par la sensibilité des détecteurs optiques 17 et puissance des émetteurs optiques courte portée 5b, soit fixée par des seuils de détection par paramétrisation au niveau de l'unité de contrôle 17.

Comme précédemment mentionné, la détection du franchissement de la frontière d'appui F1 en direction du module de capteurs 1 est considéré comme le début d'un appui par l'utilisateur, et le franchissement de ladite frontière d'appui F1 en s'éloignant du capteur d'appui 3 est considéré comme une fin d'appui.

Entre deux franchissements de la frontière d'appui F1, le mouvement de l'élément sur le module de capteur est traité comme un appui glissé sur la surface de contact 19 avec interprétation de forme, vitesse et autres caractéristiques communes à un geste et un appui glissé.

Un mode de réalisation particulier prévoit que l'unité de contrôle 17 contrôle la position des frontières F1, F2, F3 de façon dynamique. L'unité de contrôle 9 est alors configurée pour modifier la position des frontières F1, F2, F3 soit sur intervention directe de l'utilisateur (paramétrage manuel) soit en temps réel en fonction des capteurs environnementaux et ou de propriétés du ou des gestes détectés, en particulier la vitesse détectée de l'élément de commande *M*.

Le contrôle de la position des frontières F1, F2, F3 permet d'ajuster la prise en compte des gestes, par exemple pour compenser une opacification de la surface de contact 19 au cours du temps.

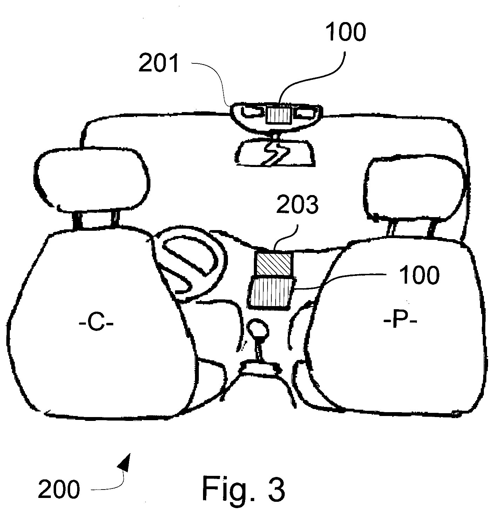

La figure 3 montre schématiquement un habitacle de véhicule automobile dans lequel des modules d'interface 100 tels que précédemment décrits ont été implémentés.

La figure 3 montre l'habitacle 200 vu depuis l'arrière du véhicule, avec notamment les sièges conducteur *C* et passager *P* vus de dos.

Un premier module d'interface 100 est avantageusement disposé au niveau du plafonnier 201 de l'habitacle, pour le contrôle de fonctions telles que l'illumination de l'habitacle.

Par exemple un geste tel qu'un balayage latéral dans l'espace de détection entraîne une variation de forte amplitude de la luminosité, tandis qu'un appui glissé permet un réglage fin de la luminosité.

De la sorte, un conducteur ayant ponctuellement besoin de lumière au cours de la conduite n'aura pas à regarder en direction du plafonnier, et n'aura donc pas à quitter la route des yeux. Le conducteur peut donc concentrer son attention sur la conduite tout en actionnant l'illumination de l'habitacle par geste.

Si un réglage fin est requis, par exemple une fois à l'arrêt ou s'il estime que la situation le permet, le conducteur peut toujours effectuer ce réglage au moyen d'un appui glissé sur le capteur d'appui 3.

D'autres fonctions telles que l'affichage (notamment sur le rétroviseur) et le réglage de l'image de caméras embarquées, par exemple de recul ou de rétroviseurs latéraux, peuvent être contrôlées au moyen du module d'interface 100.

Un second module d' interface 100 est implémenté au niveau de la console centrale du véhicule, et associé à un écran d'affichage 203. Le module d'interface 100 sert ici à naviguer dans un menu affiché à l'écran d'affichage 203, par exemple en tant que pavé tactile pour faire bouger un curseur, et/ou en tant que surface d'écriture avec reconnaissance de caractères, les gestes à distance pouvant être utilisés pour le défilement de listes ou une fonction de zoom.

Un module d'interface 100 selon l'invention permet donc de commander des fonctions, en particulier d'un véhicule, à la fois avec un capteur de geste et avec un capteur d'appui, tout en surmontant les conflits éventuels résultant de la proximité desdites interfaces.

## Revendications

1. Module de capteurs, comprenant :
- une pluralité d'émetteurs optiques (5a, 5b), configurés pour émettre des faisceaux lumineux (9a, 9b) en direction d'un espace de détection (*E*),
- une pluralité de capteurs optiques (7), configurés pour capter de la lumière des faisceaux lumineux (9a, 9b) diffusée par un élément de commande (*M*) utilisé par un utilisateur pour effectuer un geste destiné à déclencher l'exécution d'une commande,
- une surface de contact (19), transparente au moins partiellement à la lumière des faisceaux lumineux (9a, 9b), placée en amont des capteurs optiques (7),
dans lequel :
- une partie des émetteurs optiques (5b) est configurée pour émettre des faisceaux lumineux courte portée (9b), dont la lumière diffusée par l'élément de commande *M* est captée par les capteurs optiques (7),
- le module de capteurs comporte une interface (15) avec une unité de contrôle (17) configurée pour déterminer la position de l'élément de commande (*M*) pour exécuter le geste par rapport une distance prédéterminée distale par rapport à la surface de contact (19) définissant une frontière d'appui (F1), et pour interpréter les gestes détectés en position proximale par rapport à ladite frontière d'appui (F1) par captage de la lumière des faisceaux lumineux courte portée (9b) par les capteurs optiques (7) comme des appuis ou appuis glissés sur la surface de contact (19),
- une partie des émetteurs optiques (5a) est configurée pour émettre des faisceaux lumineux longue portée (9a) dont la lumière diffusée par l'objet utilisé par l'utilisateur pour effectuer le geste est captée par les capteurs optiques (7) au-delà de la distance prédéterminée définissant la frontière d'appui (F1),
- et en ce que l'unité de contrôle (17) est configurée pour interpréter les gestes détectés en position distale par rapport à ladite frontière d'appui (F1) par captage de la lumière des faisceaux lumineux longue portée (9a) par les capteurs optiques (7) comme des gestes distaux
et le module de capteurs étant **caractérisé en ce que** l'unité de contrôle (17) est en outre configurée pour introduire un temps de latence entre la détection d'un geste et l'exécution de la commande associée de sorte que
si l'élément de commande est détecté en position proximale par rapport à la frontière d' appui (F1), les commandes correspondant à des gestes détectés mais non encore pris en compte ne sont alors pas exécutées.

2. Module de capteurs selon la revendication 1, **caractérisé en ce que** les émetteurs optiques (5a, 5b) comportent des diodes électroluminescentes infra-rouge.

3. Module de capteurs selon la revendication 2, **caractérisé en ce qu'**il comporte un dispositif optique (11) convertissant les faisceaux lumineux d'au moins une partie des diodes électroluminescentes infra-rouge en faisceaux lumineux respectivement longue (9a) et/ou courte portée (9b).

4. Module de capteurs selon la revendication 3, **caractérisé en ce que** le dispositif optique (11) comporte des lentilles convergentes pour convertir des faisceaux lumineux d'une partie des diodes électroluminescentes infra-rouge en faisceaux lumineux longue portée (9a).

5. Module de capteurs selon la revendication 3, **caractérisé en ce que** le dispositif optique (11) comporte des lentilles divergentes pour convertir des faisceaux lumineux d'une partie des diodes électroluminescentes infra-rouge en faisceaux lumineux courte portée (9b).

6. Module de capteurs selon l'une des revendications précédentes, **caractérisé en ce que** les émetteurs optiques (5a, 5b) et les capteurs optiques (7) sont disposés sur un support (3) commun.

7. Module d'interface **caractérisé en ce qu'**il comporte un module de capteurs (1) selon la revendication 1.

8. Module d'interface selon la revendication 7, **caractérisé en ce que** l'unité de contrôle (17) est en outre configurée pour :
- acquérir des propriétés d'un geste détecté par traitement du signal des capteurs optiques (7),
- et pour ignorer ledit geste s'il est au moins partiellement exécuté dans la zone morte (*zm)*.

9. Module de contrôle d'éclairage intérieur de véhicule automobile, destiné à être implémenté dans un plafonnier dudit véhicule, **caractérisé en ce qu'**il comporte un module d'interface selon l'une des revendications 7 ou 8.

## Patentansprüche

1. Sensorenmodul, umfassend:
- mehrere optische Sender (5a, 5b), die dazu ausgebildet sind, Lichtbündel (9a, 9b) in Richtung eines Detektionsraumes (*E*) auszusenden,
- mehrere optische Sensoren (7), die dazu ausgebildet sind, Licht der Lichtbündel (9a, 9b) zu erfassen, das von einem Befehlselement (*M*) gestreut wird, welches von einem Benutzer verwendet wird, um eine Geste durchzuführen, die dazu bestimmt ist, die Ausführung eines Befehls auszulösen,
- eine Kontaktfläche (19), die für das Licht der Lichtbündel (9a, 9b) wenigstens teilweise durchlässig ist und den optischen Sensoren (7) vorgelagert angeordnet ist,
wobei:
- ein Teil der optischen Sender (5b) dazu ausgebildet ist, Lichtbündel für den Nahbereich (9b) auszusenden, deren von dem Befehlselement (*M*) gestreutes Licht von den optischen Sensoren (7) erfasst wird,
- das Sensorenmodul eine Schnittstelle (15) mit einer Steuereinheit (17) aufweist, die dazu ausgebildet ist, die Position des Befehlselements (*M*) zu bestimmen, um die Geste in Bezug auf einen vorbestimmten distalen Abstand in Bezug auf die Kontaktfläche (19) auszuführen, der eine Drückgrenze (F1) definiert, und um die Gesten, die durch Erfassung des Lichts der Lichtbündel für den Nahbereich (9b) durch die optischen Sensoren (7) in proximaler Position in Bezug auf die Drückgrenze (F1) detektiert werden, als Vorgänge des Drückens oder gleitenden Drückens auf die Kontaktfläche (19) zu interpretieren,
- ein Teil der optischen Sender (5a) dazu ausgebildet ist, Lichtbündel für den Fernbereich (9a) auszusenden, deren Licht, das von dem vom Benutzer zum Durchführen der Geste verwendeten Objekt gestreut wird, von den optischen Sensoren (7) jenseits des vorbestimmten Abstands erfasst wird, der die Drückgrenze (F1) definiert,
- und dadurch, dass die Steuereinheit (17) dazu ausgebildet ist, die Gesten, die durch Erfassung des Lichts der Lichtbündel für den Fernbereich (9a) durch die optischen Sensoren (7) in distaler Position in Bezug auf die Drückgrenze (F1) detektiert werden, als distale Gesten zu interpretieren,
und wobei das Sensorenmodul **dadurch gekennzeichnet ist, dass**
die Steuereinheit (17) außerdem dazu ausgebildet ist, eine Latenzzeit zwischen der Detektion einer Geste und der Ausführung des zugeordneten Befehls einzuführen, derart, dass, falls das Befehlselement in proximaler Position in Bezug auf die Drückgrenze (F1) detektiert wird, die Befehle, welche detektierten, jedoch noch nicht berücksichtigten Gesten entsprechen, dann nicht ausgeführt werden.

2. Sensorenmodul nach Anspruch 1, **dadurch gekennzeichnet, dass** die optischen Sender (5a, 5b) Infrarot-Leuchtdioden umfassen.

3. Sensorenmodul nach Anspruch 2, **dadurch gekennzeichnet, dass** es eine optische Vorrichtung (11) umfasst, welche die Lichtbündel wenigstens eines Teils der Infrarot-Leuchtdioden in Lichtbündel für den Fernbereich (9a) bzw. den Nahbereich (9b) umwandelt.

4. Sensorenmodul nach Anspruch 3, **dadurch gekennzeichnet, dass** die optische Vorrichtung (11) Sammellinsen umfasst, um Lichtbündel eines Teils der Infrarot-Leuchtdioden in Lichtbündel für den Fernbereich (9a) umzuwandeln.

5. Sensorenmodul nach Anspruch 3, **dadurch gekennzeichnet, dass** die optische Vorrichtung (11) Streulinsen umfasst, um Lichtbündel eines Teils der Infrarot-Leuchtdioden in Lichtbündel für den Nahbereich (9b) umzuwandeln.

6. Sensorenmodul nach einem der vorhergehenden Ansprüche, **dadurch gekennzeichnet, dass** die optischen Sender (5a, 5b) und die optischen Sensoren (7) auf einem gemeinsamen Träger (3) angeordnet sind.

7. Schnittstellenmodul, **dadurch gekennzeichnet, dass** es ein Sensorenmodul (1) nach Anspruch 1 umfasst.

8. Schnittstellenmodul nach Anspruch 7, **dadurch gekennzeichnet, dass** die Steuereinheit (17) außerdem dazu ausgebildet ist:
- Eigenschaften einer detektierten Geste durch Verarbeitung des Signals der optischen Sensoren (7) zu erfassen,
- und die Geste zu ignorieren, falls sie wenigstens teilweise in dem toten Bereich (*zm*) ausgeführt wird.

9. Modul zur Steuerung der Innenbeleuchtung eines Kraftfahrzeugs, welches dazu bestimmt ist, in einer Decke des Fahrzeugs implementiert zu werden, **dadurch gekennzeichnet, dass** es ein Schnittstellenmodul nach einem der Ansprüche 7 oder 8 umfasst.

## Claims

1. Sensor module, comprising:
- a plurality of optical emitters (5a, 5b) that are configured to emit light beams (9a, 9b) in the direction of a detection space (E);
- a plurality of optical sensors (7) that are configured to sense light of the light beams (9a, 9b) which is scattered by a command element (M) used by a user to perform a gesture intended to trigger the execution of a command; and
- a contact surface (19) that is at least partially transparent to the light of the light beams (9a, 9b), which surface is placed upstream of the optical sensors (7);
wherein:
- some of the optical emitters (5b) are configured to emit short-range light beams (9b) the light of which scattered by the command element *M* is captured by the optical sensors (7);
- the sensor module includes an interface (15) with a control unit (17) configured to determine the position of the command element (*M*) for executing the gesture with respect to a preset distal distance with respect to the contact surface (19) defining a press frontier (F1), and to interpret gestures detected in proximal positions with respect to said press frontier (F1) by sensing the light of the short-range light beams (9b) with the optical sensors (7) as presses or presses slid over the contact surface (19);
- some of the optical emitters (5a) are configured to emit long-range light beams (9a) the light of which scattered by the object used by the user to perform the gesture is captured by the optical sensors (7) beyond the preset distance defining the press frontier (F1);
- and in that the control unit (17) is configured to interpret gestures detected in distal positions with respect to said press frontier (F1) by sensing the light of the long-range light beams (9a) with the optical sensors (7) as distal gestures;
and the sensor module being **characterized in that** the control unit (17) is furthermore configured to introduce a latency time between the detection of a gesture and the execution of the associated command so that
if the command element is detected in a proximal position with respect to the press frontier (F1), the commands corresponding to gestures that have been detected but not yet taken into account are then not executed.

2. Sensor module according to Claim 1, **characterized in that** the optical emitters (5a, 5b) include infrared light-emitting diodes.

3. Sensor module according to Claim 2, **characterized in that** it includes an optical device (11) that converts the light beams of at least some of the infrared light-emitting diodes into long-range light beams (9a) and/or short-range light beams (9b), respectively.

4. Sensor module according to Claim 3, **characterized in that** the optical device (11) includes convergent lenses in order to convert the light beams of some of the infrared light-emitting diodes into long-range light beams (9a)

5. Sensor module according to Claim 3, **characterized in that** the optical device (11) includes divergent lenses in order to convert the light beams of some of the infrared light-emitting diodes into short-range light beams (9b).

6. Sensor module according to one of the preceding claims, **characterized in that** the optical emitters (5a, 5b) and the optical sensors (7) are placed on a common carrier (3).

7. Interface module **characterized in that** it includes a sensor module (1) according to Claim 1.

8. Interface module according to Claim 7, **characterized in that** the control unit (17) is furthermore configured to:
- acquire properties of a detected gesture by processing the signal of the optical sensors (7);
- and to ignore said gesture if it is at least partially executed in the dead zone (*zm*).

9. Module for controlling motor-vehicle interior lighting, intended to be implemented in a cabin interior roof light of said vehicle, **characterized in that** it includes an interface module according to either of Claims 7 and 8.
